# EUROPÄISCHE PATENTSCHRIFT

(11) **EP 1 151 886 B1**
(45) Veröffentlichungstag und Bekanntmachung des Hinweises auf die Patenterteilung: **01.06.2005**
(21) Anmeldenummer: 01103444.4
(22) Anmeldetag: 14.02.2001
(51) Int. Cl.: B60K 5/12, F16F 13/00

(54) **Lagerung einer Motor-Getriebeeinheit**
Mounting for an engine transmission unit
Suspension d'un ensemble moteur transmission

(30) Priorität: 04.04.2000 DE 10016654
(43) Veröffentlichungstag der Anmeldung: 07.11.2001
(73) Patentinhaber: Carl Freudenberg KG, 69469 Weinheim (DE)
(72) Erfinder: Hamaekers, Arno, 69517 Gorxheimertal (DE); Simuttis, Arnold, Dr., 55545 Bad Kreuznach (DE)

(56) Entgegenhaltungen:
- EP-A- 0 332 861
- DE-A- 3 117 378
- DE-A- 3 228 431
- DE-A- 3 522 088
- DE-C- 3 745 115

## Beschreibung

### Technisches Gebiet

Die vorliegende Erfindung betrifft eine Lagerung einer quer eingebauten Motor-Getriebeeinheit an einer Fahrzeugkarosserie eines Kraftfahrzeugs gemäß dem Oberbegriff von Anspruch 1.

### Stand der Technik

Eine derartige Lagerung ist aus der DE 32 28 431 A1 bekannt. In diesem Dokument ist eine Haltevorrichtung für die elastisch nachgiebige Hatterung eines Antriebsaggregats für ein Kraftfahrzeug mit einem in Querrichtung eingebauten Motor beschrieben, die elastisch nachgiebig verschiedene Teile des Antriebsaggregats mit verschiedenen Abschnitten eines den Motorraum umschließenden Fahrzeugaufbaus verbinden.

Aus der EP 0 818 340 ist eine Lagerung für quer im Fahrzeug eingebaute Motor-Getriebeeinheiten bekannt, bei der dem unten am Motor vorgesehenen zweiten Lagerelement eine bewegliche Pendelstütze zugeordnet ist, welche Kräfte im wesentlichen in Stangenrichtung der Pendelstütze überträgt. Nachteil der aus der EP 0 818 340 bekannten Lagerung ist, dass diese einen technisch komplizierten Aufbau der einzelnen Lagerelemente erfordert und damit teuer ist. Außerdem neigen Pendelstützen zu unerwünschten Stangenresonanzen und tragen damit zu einer Erhöhung des Geräuschniveaus im Fahrzeug bei. Weiterhin führt die Unterbringung von Pendelstützen häufig zu Problemen hinsichtlich des Bauraums und der Crashsicherheit.

Eine weitere Motorlagerung mit Pendelstütze ist aus der EP 0 332 861 A1 bekannt. Das hierbei in Kombination mit einer Pendelstütze verwendete Lager weist zwischen Anschlagteil und der umgebenden Lagerschale in einer Richtung im Ruhezustand einen Freiraum auf, der zum Entkoppeln eines Leerlaufzitterns dienen soll.

Aus der DE 37 45 115 C2 ist eine Hülsenfeder mit einer Flüssigkeitsfüllung bekannt, welche eine flüssigkeitsdichte Druckaufnahmekammer aufweist, die über einen Drosselkanal mit einem Ausgleichsraum verbunden ist.

### Darstellung der Erfindung

Der Erfindung liegt die Aufgabe zugrunde, eine Lagerung für eine Motor-Getriebeeinheit anzugeben, welche einerseits die Übertragung von unerwünschten Schwingungen auf die Fahrzeugkarosserie minimiert und andererseits kostengünstig herstellbar ist.

Diese Aufgabe wird gemäß der vorliegenden Erfindung mit den Merkmalen von Anspruch 1 gelöst.

Vorteil dieser erfindungsgemäßen Gestaltung ist, dass aufgrund der weichen Federcharakteristik bei kleinen Auslenkungen Leerlaufschwingungen besonders gut isoliert werden können. Idealerweise kann dabei die erste Federrate nahezu bei Null liegen, so dass ein Lose-Effekt eintritt. Durch die im Vergleich zur ersten Federrate größere zweite Federrate werden insbesondere Lastwechselschläge wirksam abgebremst. Die erfindungsgemäße Gestaltung macht es daher möglich, entgegengesetzte und sich scheinbar widersprechende schwingungstechnische Anforderungen in einer Lagerung zu vereinen. Durch die erfindungsgemäße Anordnung, welche eine Einleitung der Momentenkräfte der Motor-Getriebeeinheit im wesentlichen in bzw. entgegen der Fahrtrichtung vorsieht, werden schwingungstechnische Vorteile erzielt, welche darauf zurückgehen, dass die Karosserien in dieser Richtung relativ steif sind und damit relativ schwingungsunempfindlich sind. Vorteilhafterweise schließt sich zudem an den Bereich der zweiten Federrate ein Endanschlag an.

Gemäß einer Weiterbildung der Erfindung ist vorgesehen, dass das zweite Lagerelement unterhalb, im wesentlichen senkrecht unter dem ersten Lagerelement angeordnet ist.

Eine besonders gute Schwingungsisolierung wird dadurch erreicht, dass das dritte Lagerelement benachbart zur oder auf der Torque-Roll-Achse und/oder das erste Lagerelement oberhalb der Torque-Roll-Achse angeordnet sind. Die Torque-Roll-Achse ist dabei folgendermaßen definiert: Wenn ein sehr weich gelagerter, starrer Körper mit einem oszillierenden Drehmoment parallel zu einer seiner drei Hauptachsen belastet wird, so schwingt dieser Körper um diese Hauptachse. Ist der Drehmomentenvektor nicht parallel zu einer Hauptachse, so läßt sich dieser Vektor in Komponenten parallel zu den Hauptachsen zerlegen. Die einzelnen Komponenten erzeugen Schwingungen um die Hauptachsen, deren Schwingungsamplituden von den Hauptmassenträgheitsmomenten und den Komponenten des Drehmomentenvektors abhängen. Die einzelnen Drehschwingungen überlagern sich zu einer Gesamtschwingung, deren Schwingungsachse im allgemeinen weder zum Drehmomentenvektor noch zu den Hauptachsen parallel ist. Die sich einstellende Schwingungsachse wird als Torque-Roll-Achse bezeichnet.

Eine besonders kompakte Bauform wird dadurch erzielt, dass das zweite Lagerelement ein Buchsenlager ist, bei dem das zweite Verankerungsteil das erste Verankerungsteil in radialem Abstand umschließt. Damit erhält man ohne großen Aufwand eine Anschlagfunktion und Crashsicherheit.

Die Schwingungsisolierung der Motor-Getriebeeinheit wird dadurch weiter verbessert, dass das zweite Lagerelement eine mit Dämpfungsflüssigkeit gefüllte und durch eine erste Kammerwandung begrenzte erste Kammer und eine von der ersten Kammer getrennte durch eine zweite Kammerwandung begrenzte zweite Kammer, die über einen Durchlaß mit der ersten Kammer verbunden ist, aufweist, wobei bei einer Relativbewegung von erstem und zweitem Verankerungsteil das Volumen der ersten Kammer verändert wird, so dass Dämpfungsflüssigkeit in dem Durchlaß zwischen erster und zweiter Kammer bewegt wird.

Gemäß dem Erfindungsgedanken ist vorgesehen, dass die erste und/oder die zweite Kammerwandung durch eine elastische Trennwand gebildet ist, welche in der statischen Ruhelage im Stillstand des Motors derart angeordnet sind, dass bei einer Relativbewegung von erstem und zweitem Verankerungsteil im Bereich kleiner Auslenkungen um die statische Ruhelage im Stillstand des Motors das Volumen der ersten Kammer nicht verändert wird und dass bei einer Relativbewegung von erstem und zweitem Verankerungsteil im Bereich großer Auslenkungen das Volumen der ersten Kammer verändert wird. Auf diese Weise entsteht bezüglich der Dämpfung eine Art Lose-Effekt bei dem als Momentenstütze wirkenden zweiten Lagerelement, da die hydraulische Dämpfung erst dann einsetzt, wenn die Auslenkungen einen bestimmten Schwellenwert überschreiten.

Eine besonders einfach herstellbare sowie kompakte Konstruktion wird dadurch erzielt, dass die erste und/oder zweite Kammerwandung in der statischen Ruhelage im Stillstand des Motors mit einem Abstand zum Federkörper angeordnet sind. Aufgrund dieses Abstandes wird erreicht, dass bei kleinen Auslenkungen um die statische Ruhelage keine Veränderung des Volumens der ersten Kammer und damit auch keine hydraulische Dämpfung erzielt wird. Wenn die Auslenkungen größer sind und den vorgenannten Abstand überschreiten, kommt es zu Veränderungen des Volumens der ersten Kammer und infolgedessen zu der gewünschten hydraulischen Dämpfung.

Federraten, welche im Bereich kleiner und großer Auslenkungen um die statische Ruhelage unterschiedlich groß sind, können dadurch besonders vorteilhaft erreicht werden, dass in der ersten und/oder der zweiten Kammer insbesondere elastische Puffer vorgesehen sind, die die Relativbewegung zwischen erstem und zweitem Verankerungsteil begrenzen. Dabei addieren sich im Bereich großer Auslenkungen die Federraten der elastischen Puffer zu den Federraten des Federkörpers. Sehr niedrige dynamische Steifigkeiten können auch dadurch erreicht werden, dass der Spalt durch Gummistege überbrückt wird und sehr große Durchlässe im Bereich der äußeren Anbindung des Federkörpers an das zweite Verankerungsteil vorgesehen sind. So kann im im Leerlauf eine hydraulische Tilgungsfunktion erreicht werden, wobei sich das Lager bei Leerlaufschwingungen weicher als im statischen Zustand verhält.

Eine besonders gute Schwingungsisolierung wird dadurch erreicht, dass das erste, zweite und/oder dritte Lagerelement an Karosseriestellen mit hoher Steifigkeit, insbesondere im Bereich der Fahrwerksbefestigung angeordnet ist. Dabei können die Lagerelemente an dem Chassis des Fahrzeugs oder an einem Hilfsrahmen der Karosserie festgelegt sein. Vorteilhafterweise sind dabei alle Lagerelemente ohne bewegliche Zwischenelemente mit der Motor-Getriebe-Einheit und der Karosserie verbunden.

Gemäß einer besonders vorteilhaften und kostengünstig herzustellenden Ausführungsform der Erfindung ist vorgesehen, dass die Motor-Getriebe-Einheit mit genau drei Lagerelementen an der Fahrzeugkarosserie festgelegt ist. Das erfindungsgemäße erste, zweite und dritte Lagerelement sind in den meisten Fällen ausreichend, um eine in schwingungstechnischer Hinsicht gute Lagerung der quer eingebauten Motor-Getriebe-Einheit zu erreichen. Jedoch führt es nicht aus der vorliegenden Erfindung heraus, wenn neben den erfindungsgemäß angeordneten und ausgeführten drei Lagerelementen ein oder mehrere weitere Lagerelemente vorgesehen werden sollten.

Weiterhin hat sich als besonders vorteilhaft erwiesen, wenn das erste Lagerelement am oder benachbart zum oberen Ende der Motor-Getriebe-Einheit und das zweite Lagerelement am oder benachbart zum unteren Ende der Motor-Getriebe-Einheit angeordnet sind. Durch einen großen Abstand dieser Lagerelemente kann eine besonders gute Schwingungsisolierung erreicht werden.

Weiterhin hat sich als vorteilhaft erwiesen, wenn das erste und das dritte Lagerelement derart angeordnet sind, dass der Schwerpunkt der Motor-Getriebe-Einheit unterhalb einer gedachten Verbindungslinie zwischen erstem Lagerelement und drittem Lagerelement liegt.

### Kurzbeschreibung der Zeichnung

Nachfolgend werden bevorzugte Ausführungsbeispiele der erfindungsgemäßen Lagerung näher erläutert. Es zeigen:
- Figur 1: eine erfindungsgemäße Motorlagerung von oben
- Figur 2: eine erfindungsgemäße Motorlagerung von der Rückseite
- Figur 3: ein Lagerelement, welches insbesondere als zweites Lagerelement verwendet wird in dreidimensionaler Darstellung
- Figur 4: das Lagerelement aus Figur 3 von oben
- Figur 5: das Lagerelement aus Figur 3 von vom
- Figur 6: das Lagerelement aus Figur 3 im Schnitt entlang der Linie A-A
- Figur 7: das Lagerelement aus Figur 4 im Schnitt entlang der Linie B-B
- Figur 8: das Lagerelement aus Figur 5 im Schnitt entlang der Linie C-C
- Figur 9: ein Lagerelement, welches erfindungsgemäß als erstes und/oder drittes Lagerelement verwendet wird, im Schnitt
- Figur 10: eine weitere Ausführungsform eines Lagerelements welches erfindungsgemäß als erstes und/oder drittes Lagerelement verwendet wird, im Schnitt
- Figur 11: das Lagerelement aus Figur 10 im Schnitt entlang der Linie D-D

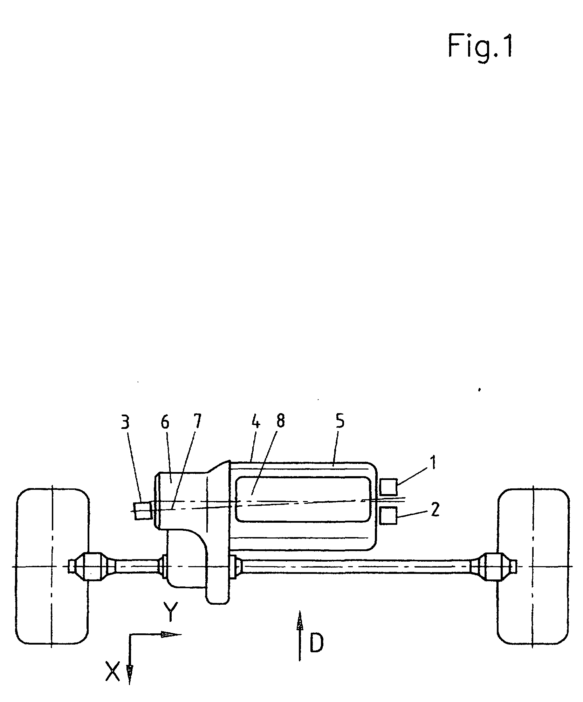

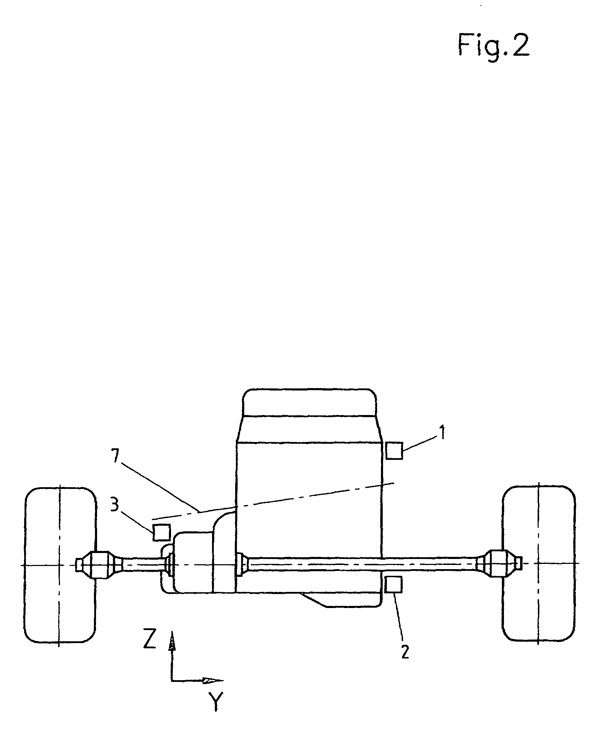

In Figur 1 und 2 ist schematisch die Lagerung einer Motorgetriebeeinheit 4 an einer Fahrzeugkarosserie (nicht dargestellt) eines Kraftfahrzeuges dargestellt. Dabei geben die Koordinaten X, Y und Z die Orientierung im Raum an. X weist waagerecht nach hinten, somit entgegen der Fahrtrichtung, welche mit D angegeben ist. Y weist in Fahrtrichtung gesehen waagerecht nach rechts, während Z die vertikale Richtung angibt.

Die Motorgetriebeeinheit 4 besteht im wesentlichen aus dem quer eingebauten Motor 5 und dem Getriebe 6. Die Lagerung der Motorgetriebeeinheit 4 weist ein erstes Lagerelement 1, welches zwischen Motor 5 und Fahrzeugkarosserie angeordnet ist, ein zweites Lagerelement 2, welches zwischen Motor 5 und Fahrzeugkarosserie angeordnet ist und ein drittes Lagerelement 3, welches zwischen Getriebe 6 und Fahrzeugkarosserie angeordnet ist, auf. Wie insbesondere in Figur 2 erkennbar ist, ist das zweite Lagerelement 2 unterhalb des ersten Lagerelements 1 angeordnet. Dabei ist das zweite Lagerelement 2 im wesentlichen senkrecht unter dem ersten Lagerelement 1 vorgesehen. Das erste Lagerelement 1 ist oberhalb der Torque-Roll-Achse 7 an den Motor 5 angeordnet. Das dritte Lagerelement 3 ist benachbart zu Torque-Roll-Achse 7 oder auf der Torque-Roll-Achse 7 selbst angeordnet.

Das zweite Lagerelement 2 ist vorteilhafterweise an einer Karosseriestelle des Fahrzeugs mit hoher Steifigkeit angeordnet, insbesondere im Bereich der Fahrwerksbefestigung, wobei die Karosseriestelle das Chassis selbst oder ein Hilfsrahmen sein kann.

Das zweite Lagerelement 2 ist derart ausgebildet und ohne bewegliches Zwischenelement an Motor und Fahrzeugkarosserie angeordnet, dass durch das zweite Lagerelement 2 abgestützte Momentenkräfte der Motor-Getriebe-Einheit 4 im wesentlichen in Fahrzeuglängsrichtung, also in bzw. entgegen der Richtung X, in die Fahrzeugkarosserie eingeleitet werden.

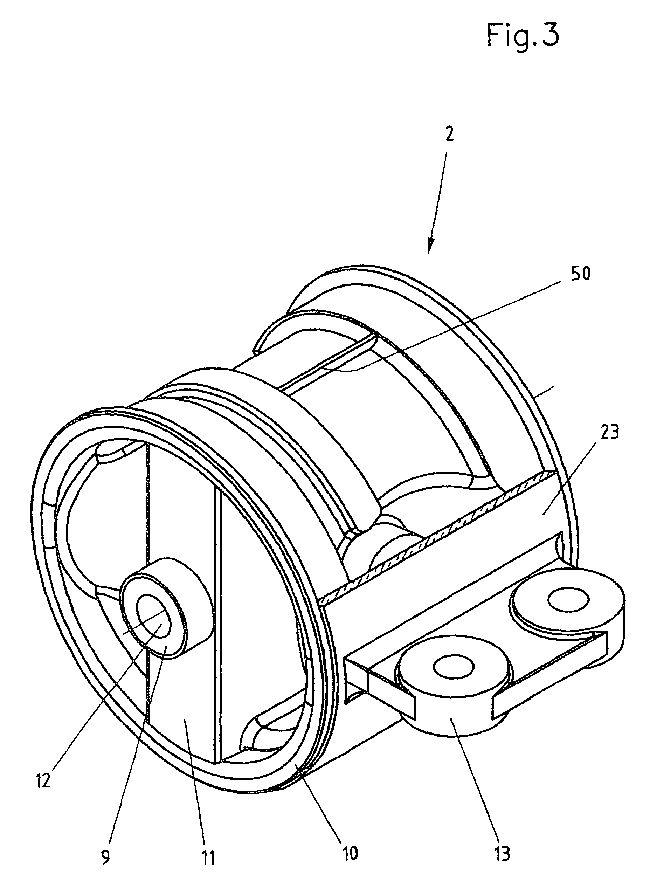

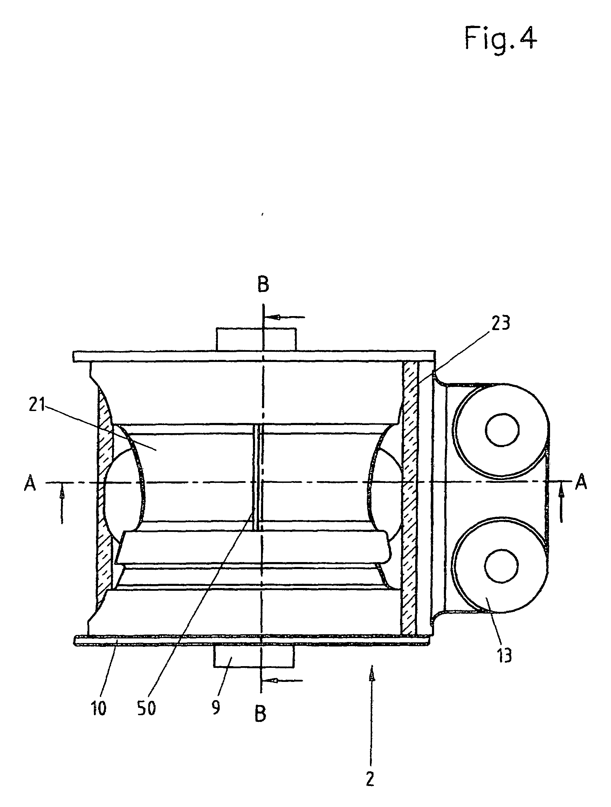

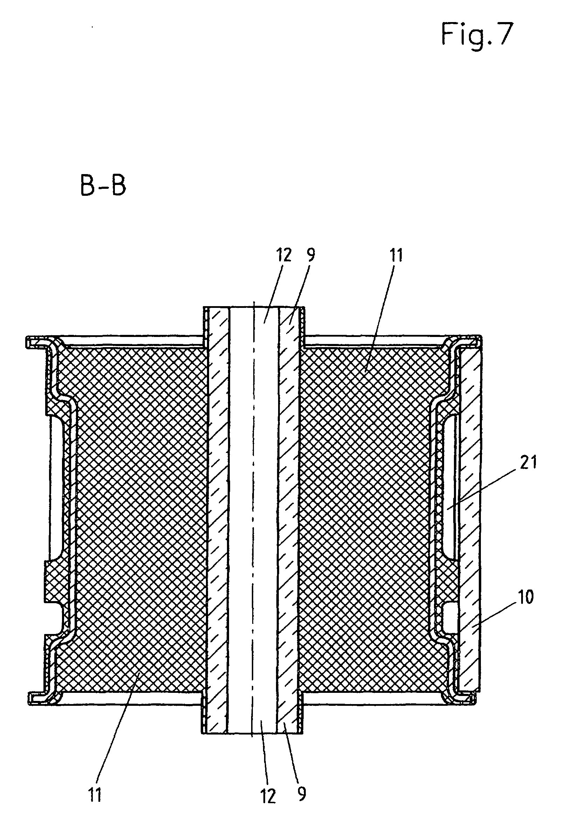

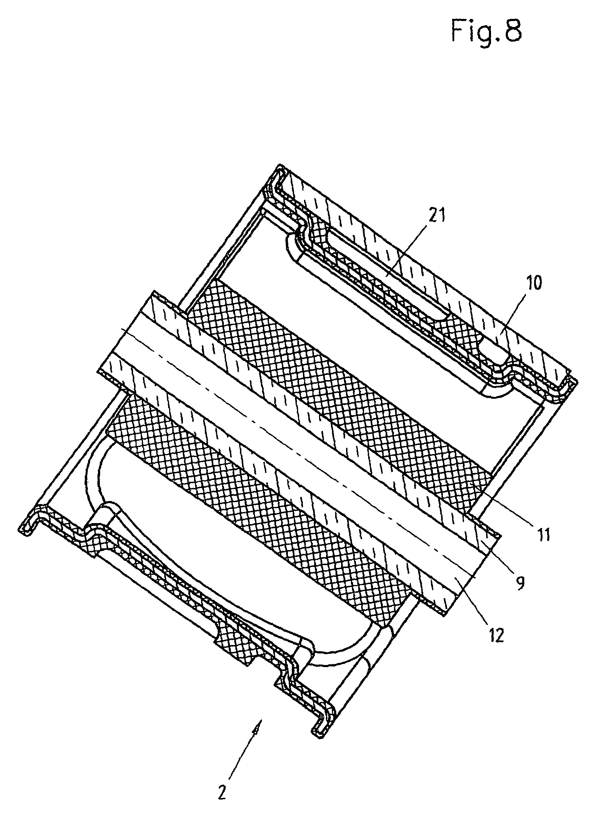

Das in den Figuren 3 bis 8 dargestellte zweite Lagerelement 2 weist ein erstes Verankerungsteil 9 und ein relativ zu diesem bewegliches zweites Verankerungsteil 10 auf, wobei zwischen dem ersten und dem zweiten Verankerungsteil 9, 10 ein Federkörper 11 wirkt. Das zweite Verankerungsteil ist insbesondere als ein Buchsenlager ausgebildet, bei dem das zweite Verankerungsteil 10 das erste Verankerungsteil 9 in radialem Abstand umschließt. Das erste Verankerungsteil 9 weist eine Bohrung 12 auf, welches sich durch das erste Verankerungsteil erstreckt. Über diese Bohrung 12 ist das zweite Lagerelement 2 mit dem Motor 5 oder der Fahrzeugkarosserie verbindbar. An dem zweiten Verankerungsteil 10 ist ein sich im wesentlichen in radialer Richtung erstreckender Befestigungsflansch 13 angeformt, über den das zweite Verankerungsteil 10 mit der Fahrzeugkarosserie oder dem Motor 5 eines Kraftfahrzeugs verbindbar ist.

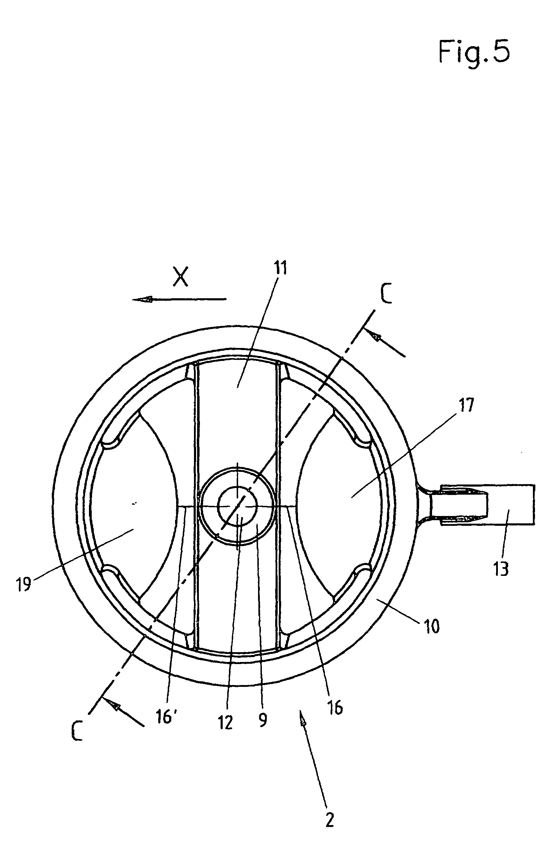

Das zweite Lagerelement 2 ist dabei so ausgebildet, dass in einem ersten Bereich, welcher kleine Auslenkungen in Fahrzeuglängsrichtung (also in bzw. entgegen der in Figur 5 angedeuteten Richtung X) um die statische Ruhelage im Stillstand des Motors 5 umfaßt eine erste Federrate und in einem zweiten Bereich, welche sich an den ersten Bereich anschließt und größere Auslenkungen in Fahrzeuglängsrichtung umfaßt, eine zweite Federrate aufweist, wobei die zweite Federrate größer als die erste Federrate ist. Dies wird erfindungsgemäß insbesondere auch dadurch erreicht, dass die Federrate des zweiten Lagerelements 2 bei kleinen Auslenkungen um die statische Ruhelage im Stillstand des Motors von dem ersten Federkörper 11 im wesentlichen bestimmt wird. Dieser weist eine Federrate auf, die im Bereich zwischen 20 bis 500 N/mm liegt. Auf diese Weise wird eine weiche Lagerung um die statische Ruhelage erzielt. Eine Erhöhung der Federrate im Bereich größerer Auslenkungen wird durch die zweiten Federkörper 14, 14' erzielt. Die einander gegenüberliegend angeordneten zweiten Federkörper 14, 14' sind dabei so angeordnet und ausgebildet, dass sie nur dann federnd verformt werden, wenn die Relativbewegung zwischen ersten und zweiten Verankerungsteil eine bestimmte Amplitude überschreitet. Die zweiten Federkörper 14, 14' wirken nur in diesem Bereich größerer Auslenkungen, so dass es zu einer Erhöhung der Federrate und damit zu einer härteren Lagercharakteristik kommt.

Die erste Federkörper 11 ist als ein Elastomerkörper ausgebildet, welcher das erste und zweite Verankerungsteil 9, 10 miteinander verbindet. Dabei ist der erste Federkörper 11 als ein Steg ausgebildet, welcher sich durch den von dem zweiten Verankerungsteil 10 eingeschlossenen Raum erstreckt. In dem ersten Federkörper 11 ist das erste Verankerungsteil 9, welches durch eine Metallhülse gebildet wird, einvulkanisiert. Der erste Federkörper 11 erstreckt sich dabei im wesentlichen entlang einer ersten Ebene 15 welche im wesentlichen senkrecht angeordnet ist.

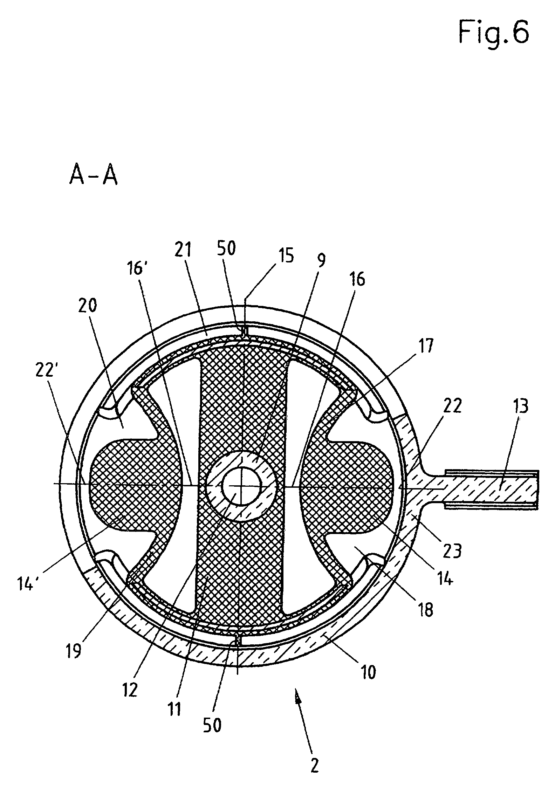

Die zweiten Federkörper 14, 14' sind in dem zwischen dem zweiten Verankerungsteil 10 und dem ersten Federkörper 11 gebildeten Hohlraum angeordnet. Sie bestehen, wie der erste Federkörper 11, aus Elastomer und sind in einem einzigen Verfahrensschritt mit diesem hergestellt. Wie insbesondere in Figur 6 erkennbar ist, sind je ein zweiter Federkörper 14, 14' zu beiden Seiten, insbesondere symmetrisch zu der ersten Ebene 15 in einer zweiten Ebene 16, welche sich im wesentlichen senkrecht zur ersten Ebene 15 erstreckt, angeordnet. Dabei ist zwischen dem zweiten Federkörper 14 bzw. 14' und dem ersten Federkörper 11 jeweils ein Spalt 16, 16' ausgebildet. Durch diesen Spalt 16, 16' wird erreicht, dass bei Auslenkungen, welche kleiner als der Spalt 16, 16' sind die Federrate des zweiten Lagerelements 2 im wesentlichen allein durch den ersten Federkörper 11 bestimmt wird. Überschreiten die Auslenkungen die Größe des Spaltes 16, 16' werden die zweiten Federkörper 14, 14' bewegt bzw. deformiert, so dass sich deren Federraten zu der Federrate des ersten Federkörpers addiert.

Um Belastungen der ersten und zweiten Kammerwandung 17, 19 bei extrem heftigen Motorbewegungen von Anschlag zu Anschlag zu vermeiden, sind vorteilhafterweise in dem Durchlass 21 Ventile 50, insbesondere mit einer an das zweite Verankerungsteil 10 anvulkanisierte Gummilippen vorgesehen.

Die zweiten Federkörper 14, 14' sind als ein Puffer ausgebildet, der die Relativbewegung zwischen ersten und zweiten Verankerungsteil 9, 10 begrenzt. Die Federraten des zweiten Federkörpers 14, 14' erhöhen sich bei zunehmender Verformung, so dass mit zunehmender Größe der Auslenkungen eine weitere Verhärtung des zweiten Lagerelements 2 eintritt.

Das zweite Lagerelement 2 weist einen mit Dämpfungsflüssigkeit gefüllten und durch eine erste Kammerwandung 17 begrenzte erste Kammer 18 und eine von der ersten Kammer 18 getrennte durch eine zweite Kammerwandung 19 begrenzte zweite Kammer 20 auf, die über einen Durchlaß 21 mit der ersten Kammer 18 verbunden ist, wobei bei einer Relativbewegung von der ersten und zweiten Verankerungsteil 9, 10 das Volumen der ersten Kammer 18 verändert wird, so dass Dämpfungsflüssigkeit in den Durchlaß 21 zwischen erster Kammer 18 und zweiter Kammer 20 bewegt wird. Die erste und/oder zweite Kammerwandung 17, 19 sind durch eine elastische Trennwand gebildet. Diese besteht aus Elastomer und wird in einem Arbeitsgang mit dem ersten Federkörper 11 und dem zweiten Federkörper 14, 14' einstückig hergestellt. Die erste und/oder die zweite Kammerwandung 17, 19 sind derart angeordnet und ausgebildet, so dass bei einer Relativbewegung von ersten und zweiten Verankerungsteil 9, 10 im Bereich kleiner Auslenkungen um die statische Ruhelage im Stillstand des Motors 5 das Volumen der ersten Kammer 18 nicht verändert wird. Dies wird durch den oben erwähnten Spalt 16, 16' erreicht, welcher zwischen den Kammerwandungen 17 beziehungsweise 19 und dem ersten Federkörper 11 ausgebildet ist. Bei einer Relativbewegung von erstem und zweitem Verankerungsteil 9, 10 im Bereich großer Auslenkungen jedoch wird das Volumen der ersten Kammer 18 verändert. Auf diese Weise erfolgt im Bereich größerer Auslenkungen eine hydraulische Dämpfung der zwischen ersten und zweiten Verankerungsteil auftretenden Relativbewegungen.

Die zweiten Federkörper 14, 14' sind dabei in der ersten Kammer 18 beziehungsweise in der zweiten Kammer 20 angeordnet. Dabei ist zwischen dem zweiten Federkörper 14 beziehungsweise 14' und dem zweiten Verankerungsteil 10 ein Abstand 22 beziehungsweise 22' vorgesehen.
Der die erste und zweite Kammer 18, 20 verbindende Durchlaß 21 erstreckt sich in Umfangsrichtung im Inneren des zweiten Verankerungsteils 10. Dabei ist der Durchlaß 21 benachbart zur Außenwandung 23 angeordnet. In dem Durchlaß 21 ist ein Drosselventil angeordnet, durch welches der Strömungswiderstand in dem Durchlaß 21 auf einen gewünschten Wert eingestellt werden kann.

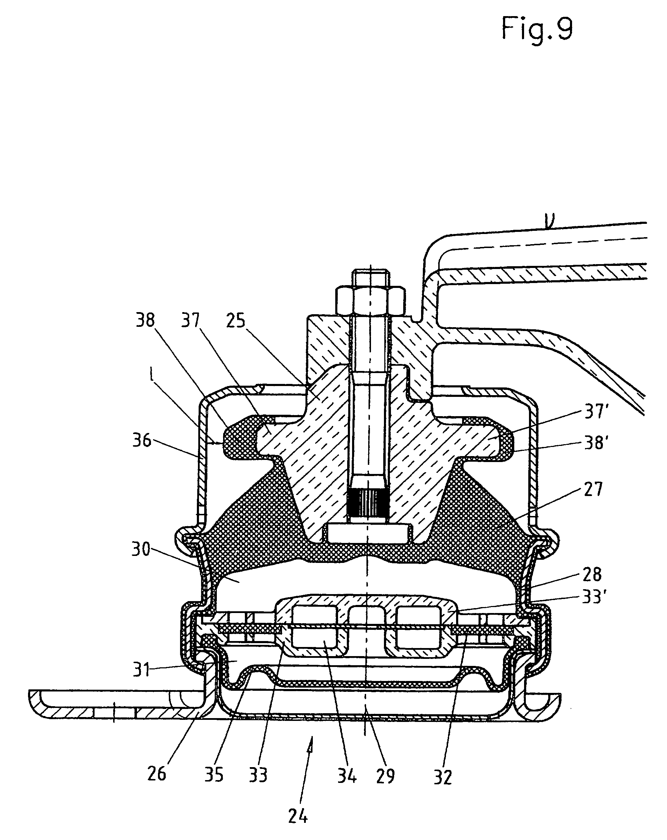

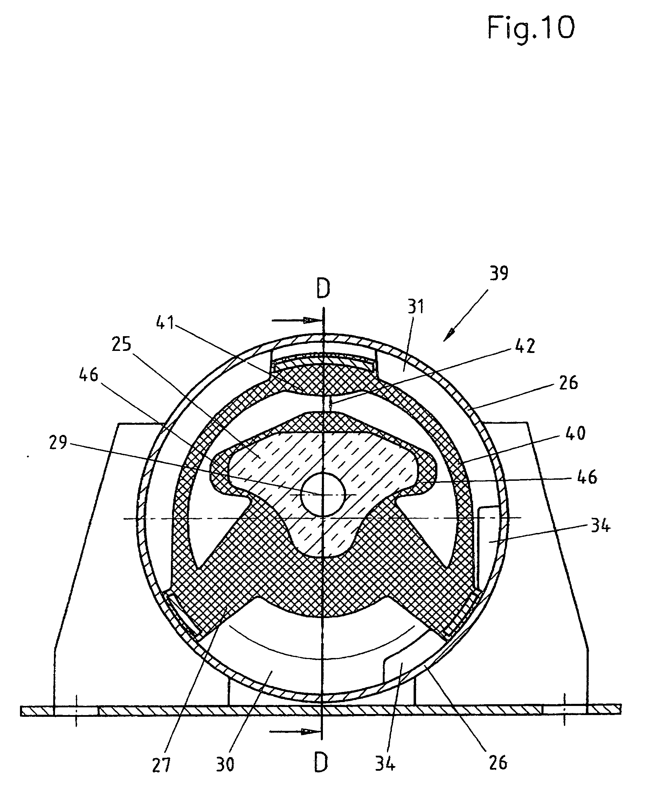

In Figur 9 und 10 ist eine erste Ausführungsform eines hydraulisch dämpfenden Lagers 24 beschrieben, welches erfindungsgemäß als erstes Lagerelement 1 und/oder drittes Lagerelement 3 eingesetzt werden kann.

Das Lager 24 weist einen ersten Stützkörper 25 und einen beweglich zu diesem angeordneten zweiten Stützkörper 26 auf. Über die aus Metall bestehenden ersten und zweiten Stützkörper 25, 26 kann das Lager einerseits mit dem Motor 5 beziehungsweise dem Getriebe 6 und andererseits mit der Fahrzeugkarosserie verbunden werden.

Zwischen dem ersten Stützkörper 25 und dem zweiten Stützkörper 26 ist ein Federelement 27 vorgesehen, welches als Gummikörper ausgebildet ist. Der ringförmige Gummikörper hat im wesentlichen die Form eines hohlen Kegelstumpfs wobei das in radialer Richtung äußere Ende mit dem zweiten Stützkörper 26 und das in radialer Richtung innere Ende mit dem ersten Stützkörper 25 verbunden ist. Dabei kann das Federelement 27 durch Vulkanisieren mit dem ersten und dem zweiten Stützkörper 25, 26 verbunden sein.

Der zweite Stützkörper 26 weist einen ersten Gehäuseabschnitt 28 auf, der die Lagerachse 29 ringförmig umschließt. An dem den ersten Stützkörper 25 zugewandten Ende des ersten Gehäuseabschnitts 28 ist das Federelement 27 festgelegt.

In dem durch den ersten Gehäuseabschnitt 28 umgrenzten Raum ist ein Arbeitsraum 30 und ein Ausgleichsraum 31 ausgebildet. Der Arbeitsraum 30 ist von dem Ausgleichsraum 31 durch eine Trennwand 32, welche an einem Stützkörper 33 gelagert ist, getrennt. Dabei sind der Arbeitsraum 30 und der Ausgleichsraum 31 mit Dämpfungsflüssigkeit gefüllt und über ein Dämpfungskanal 34 flüssigkeitsleitend miteinander verbunden.

Der Arbeitsraum 30 wird durch den ersten Stützkörper 25, den ersten Gehäuseabschnitt 28, die Trennwand 32 und den Stützkörper 33 begrenzt. Der Ausgleichsraum 31 wird durch die dem Arbeitsraum 30 abgewandte Seite der Trennwand 32 und des Stützkörpers 33 so wie eine als Rollbalg ausgebildete Membran 35 begrenzt.

Bei einer Relativbewegung zwischen den erstem Stützkörper 25 und dem zweiten Stützkörper 26 wird das Volumen des mit Dämpfungsflüssigkeit vollständig gefüllten Arbeitsraums 30 verändert, so dass Dämpfungsflüssigkeit durch den Dämpfungskanal 34 zwischen dem Arbeitsraum 30 und dem Ausgleichsraum 31 bewegt wird. Die elastische Membran 35 ermöglicht es, dass in dem vollständig mit Dämpfungsflüssigkeit gefüllten Ausgleichsraum 31 ein veränderliches Volumen der Dämpfungsflüssigkeit aufgenommen werden kann. Bei Einleitung von Schwingungen in das Lager 24 wird eine Schwingungsreduzierung dadurch erreicht, dass die in dem Dämpfungskanal 44 aufgenommene Dämpfungsflüssigkeit gleichfalls in Schwingungen versetzt wird, wenn die Eigenfrequenz der Dämpfungsflüssigkeit in dem Dämpfungskanal 44 angeregt wird.

An dem zweiten Stützkörper 26 ist ein zweiter Gehäuseabschnitt 36 vorgesehen, welcher den ersten Stützkörper 25 mit einem Abstand "I" ringförmig umschließt. An dem ersten Stützkörper 25 ist ein Anschlag 37 ausgebildet. In der linken Bildhälfte ist der Stützkörper 25 mit dem Anschlag 37 in einem Teilschnitt dargestellt, welcher in Fahrtrichtung verläuft. In der rechten Bildhälfte sind dieselben Teile in einem Teilschnitt quer zur Fahrtrichtung dargestellt.

Der Anschlag 37, 37' ist mit einem elastischen Material 38, welches vorzugsweise als Gummipuffer ausgebildet ist, versehen.

Bei Relativbewegungen welche kleiner als der Abstand I sind, beeinflußt der Anschlag 37 das Schwingungsverhalten des Lagers 24 nicht. Werden die Amplituden der Bewegungen jedoch größer, dann kommt der Puffer 38 in Kontakt mit dem zweiten Gehäuseabschnitt 36 und wird dabei deformiert. Wie in Figur 9 dargestellt ist der Puffer 38 in x- und in y-Richtung unterschiedlich dick ausgebildet, so dass in diesen Richtungen unterschiedlich weiche Anschläge erzeugt werden. Bei den in Figur 9 dargestellten Ausführungsform ist der Puffer 38 dicker als der Puffer 38', wodurch in x-Richtung ein weicherer Anschlag erzielt wird als in y-Richtung.

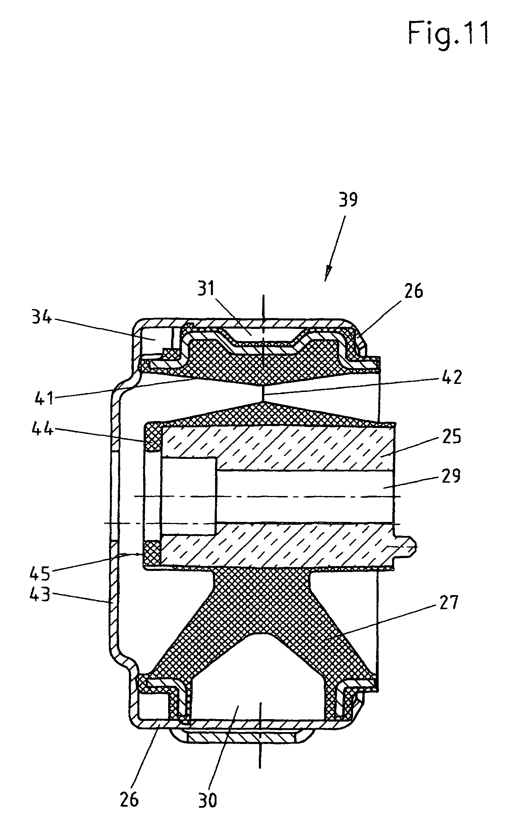

Figuren 10 und 11 zeigen ein Lager 39, welches erfindungsgemäß als erstes und/oder drittes Lagerelement 1,3 verwendet werden kann. Das Lager 39 ist als hydraulisch dämpfendes Buchsenlager (Hydrobuchse) ausgebildet. Teile gleicher Funktion wie bei dem oben beschriebenen Lager 24 sind mit denselben Bezugszeichen versehen.

Das Lager 39 weist einen ersten Stützkörper 25 und einen relativ zu dem ersten Stützkörper 25 beweglichen zweiten Stützkörper 26 auf. Über die aus Metall bestehenden ersten und zweiten Stützkörper 25, 26 kann das Lager 39 einerseits mit dem Motor 5 beziehungsweise dem Getriebe und andererseits mit dem Chassis eines Kraftfahrzeugs verbunden werden. Der zweite Stützkörper 26 umschließt den ersten Stützkörper 25 ringförmig. Dabei ist zwischen ersten und zweiten Stützkörper 25, 26 ein Federelement 27 vorgesehen, welches als Gummikörper ausgebildet ist. In dem zwischen ersten und zweiten Stützkörper 25, 26 gebildeten Raum ist ein Arbeitsraum 30 und ein Ausgleichsraum 31 ausgebildet. Der Arbeitsraum 30 wird durch das Federelement 27 und den zweiten Stützkörper 26 begrenzt. Der Ausgleichsraum 31 wird durch den zweiten Stützkörper 26 und eine elastische Wandung 40 begrenzt. Der Arbeitsraum 30 und der Ausgleichsraum 31 sind mit Dämpfungsflüssigkeit gefüllt und über einen Dämpfungskanal 34 miteinander flüssigkeitsleitend verbunden.

Bei einer Relativbewegung zwischen erstem und zweitem Stützkörper 25, 26 wird das Volumen des mit Dämpfungsflüssigkeit vollständig gefüllten Arbeitsraums 30 verändert, so dass Dämpfungsflüssigkeit durch den Dämpfungskanal 44 zwischen dem Arbeitsraum 30 und dem Ausgleichsraum 31 bewegt wird. Die elastische Wandung 40 ermöglicht es dabei, dass in dem mit vollständig mit Dämpfungsflüssigkeit gefüllten Ausgleichsraum 31 ein veränderliches Volumen der Dämpfungsflüssigkeit aufgenommen werden kann.

Das Lager 39 weist einen quer zur Lagerachse wirkenden Ausfederanschlag 41 auf. Er wird gebildet durch einen elastischen Puffer, welcher an dem zweiten Stützkörper 26 ausgebildet ist. Der Ausfederanschlag 41 ist von dem ersten Stützkörper 25 durch einen Spalt 42 getrennt. An der dem Ausfederanschlag 41 gegenüberliegenden Seite des ersten Stützkörpers 25 ist gleichfalls eine elastische Schicht aufgebracht. Weiterhin weist der zweite Stützkörper 26 einen radial nach innen weisenden dritten Gehäuseabschnitt 43 auf, welcher eine Anschlagfläche für einen an dem ersten Stützkörper 25 ausgebildeten axialen Anschlag 44 bildet. Der in Fahrzeugquerrichtung wirkende axiale Anschlag 44 ist durch einen Spalt 45 von dem dritten Gehäuseabschnitt 43 entfernt. Der axiale Anschlag 44 ist darüberhinaus mit einem elastischen Puffer aus Elastomer versehen. Wie in Figur 10 erkennbar ist, ist der erste Stützkörper 25 darüber hinaus mit sich quer zur Lagerachse 29 und versetzt zu dem Ausfederanschlag 41 angeordneten Drehmomentenabstützpuffern 46 versehen. Der Drehmomentenabstützpuffer verhindert die Entstehung von Geräuschen, welche ansonsten bei einer Berührung von ersten und zweiten Stützkörper 25, 26 entstehen könnten.

## Patentansprüche

1. Lagerung einer quer eingebauten Motorgetriebeeinheit (4) an einer Fahrzeugkarosserie eines Kraftfahrzeugs, mit einem ersten Lagerelement (1) welches zwischen Motor (5) und Fahrzeugkarosserie angeordnet ist, mit einem zweiten Lagerelement (2), welches zwischen Motor (5) oder Getriebe (6) und Fahrzeugkarosserie angeordnet ist und mit einem dritten Lagerelement (3), welches zwischen Getriebe (6) und Fahrzeugkarosserie angeordnet ist, wobei das zweite Lagerelement (2) ohne bewegliches Zwischenelement an Motor bzw. Getriebe und Fahrzeugkarosserie angeordnet ist, und wobei das zweite Lagerelement (2) ein erstes Verankerungsteil (9) und ein relativ zu diesem bewegliches zweites Verankerungsteil (10) aufweist, wobei zwischen dem ersten und dem zweiten Verankerungsteil (9, 10) wenigstens ein Federkörper (11, 14, 14') wirkt, **dadurch gekennzeichnet, dass** das zweite Lagerelement (2) derart ausgebildet und an Motor bzw. Getriebe und Fahrzeugkarosserie angeordnet ist, dass durch das zweite Lagerelement (2) abgestützte Momentenkräfte der Motor-Getriebeeinheit (4) im wesentlichen in Fahrzeuglängsrichtung in die Fahrzeugkarosserie eingeleitet werden, dass das zweite Lagerelement (2) in einem ersten Bereich, welcher kleine Auslenkungen in Fahrzeuglängsrichtung um die statische Ruhelage im Stillstand des Motors (5) umfasst, eine erste Federrate und in einem zweiten Bereich, welcher sich an den ersten Bereich anschließt und größere Auslenkungen in Fahrzeuglängsrichtung umfasst, eine zweite Federrate aufweist, wobei die zweite Federrate größer als die erste Federrate ist, dass das zweite Lagerelement (2) eine mit Dämpfungsflüssigkeit gefüllte und durch eine erste Kammerwandung (17) begrenzte erste Kammer (18) und eine von der ersten Kammer (18) getrennte durch eine zweite Kammerwandung (19) begrenzte zweite Kammer (20), die über einen Durchlass (21) mit der ersten Kammer (18) verbunden ist, aufweist, wobei bei einer Relativbewegung von erstem und zweitem Verankerungsteil (9, 10) im Bereich großer Auslenkungen das Volumen der ersten Kammer (18) verändert wird, so dass Dämpfungsflüssigkeit in dem Durchlass (21) zwischen erster Kammer (18) und zweiter Kammer (20) bewegt wird, und dass die erste und/oder die zweite Kammerwandung (17, 19) durch eine elastische Trennwand gebildet sind, welche derart angeordnet sind, dass bei einer Relativbewegung von erstem und zweitem Verankerungsteil (9, 10) im Bereich kleiner Auslenkungen um die statische Ruhelage im Stillstand des Motors das Volumen der ersten Kammer (18) nicht verändert wird.

2. Lagerung nach Anspruch 1, **dadurch gekennzeichnet, dass** das zweite Lagerelement (2) unterhalb, insbesondere im Wesentlichen senkrecht unter dem ersten oder dritten Lagerelement (1,3) angeordnet ist.

3. Lagerung nach Anspruch 1 oder 2, **dadurch gekennzeichnet, dass** das dritte Lagerelement (3) benachbart zur oder auf der Torque-Roll-Achse (7) angeordnet ist.

4. Lagerung nach einem der Ansprüche 1 bis 3, **dadurch gekennzeichnet, dass** das erste Lagerelement (1) oberhalb der Torque-Roll-Achse (7) angeordnet ist.

5. Lagerung nach einem der Ansprüche 1 bis 4, **dadurch gekennzeichnet, dass** das zweite Lagerelement (2) ein Buchsenlager ist, bei dem das zweite Verankerungsteil (2) das erste Verankerungsteil (1) in radialem Abstand abschließt.

6. Lagerung nach einem der Ansprüche 1 bis 5, **dadurch gekennzeichnet, dass** die erste und/oder zweite Kammerwandung (17, 19) in der statischen Ruhelage im Stillstand des Motors mit einem Abstand zum Federkörper (11) angeordnet ist.

7. Lagerung nach einem der Ansprüche 1 bis 6, **dadurch gekennzeichnet, dass** in der ersten Kammer (18) und/oder der zweiten Kammer (20) ein insbesondere elastischer Puffer vorgesehen ist, der die Relativbewegung zwischen erstem und zweitem Verankerungsteil (9, 10) begrenzt.

8. Lagerung nach einem der vorhergehenden Ansprüche, **dadurch gekennzeichnet, dass** das erste, zweite und/oder dritte Lagerelement (1,2,3) insbesondere unmittelbar an Karosseriestellen mit hoher Steifigkeit insbesondere im Bereich der Fahrwerksbefestigung befestigt sind.

9. Lagerung nach einem der vorhergehenden Ansprüche, **dadurch gekennzeichnet, dass** die Motor-Getriebeeinheit mit genau drei Lagerelementen an der Fahrzeugkarosserie festgelegt ist.

10. Lagerung nach einem der vorhergehenden Ansprüche, **dadurch gekennzeichnet, dass** das erste Lagerelement (1) am oder benachbart zum oberen Ende der Motor-Getriebeeinheit (4) und das zweite Lagerelement (2) am oder benachbart zum unteren Ende der Motor-Getriebeeinheit (4) angeordnet sind.

11. Lagerung nach einem der vorhergehenden Ansprüche, **dadurch gekennzeichnet, dass** das erste und das dritte Lagerelement (1,3) derart angeordnet sind, dass der Schwerpunkt der Motor-Getriebeeinheit (4) unterhalb einer gedachten Verbindungslinie zwischen erstem Lagerelement (1) und drittem Lagerelement (3) liegt.

## Claims

1. Mounting for a transversely installed engine/transmission unit (4) on a vehicle body of a motor vehicle, having a first bearing element (1) which is arranged between the engine (5) and the vehicle body, having a second bearing element (2) which is arranged between the engine (5) or the transmission (6) and the vehicle body, and having a third bearing element (3) which is arranged between the transmission (6) and the vehicle body, the second bearing element (2) being arranged without a movable intermediate element on the engine or the transmission and the vehicle body, and the second bearing element (2) having a first anchoring part (9) and a second anchoring part (10) which can be moved relative to the former, at least one spring body (11, 14, 14') acting between the first anchoring part (9) and the second anchoring part (10), **characterized in that** the second bearing element (2) is configured and arranged on the engine or transmission and the vehicle body in such a way that torque forces of the engine/transmission unit (4) which are supported by the second bearing element (2) are introduced into the vehicle body substantially in the longitudinal direction of the vehicle, **in that** the second bearing element (2) has a first spring rate in a first range, which comprises small deflections in the longitudinal direction of the vehicle about the static position of rest when the engine (5) is at a standstill, and a second spring rate in a second range which adjoins the first range and comprises larger deflections in the longitudinal direction of the vehicle, the second spring rate being greater than the first spring rate, **in that** the second bearing element (2) has a first chamber (18), which is filled with damping fluid and is delimited by a first chamber wall (17), and a second chamber (20), which is separated from the first chamber (18), is delimited by a second chamber wall (19) and is connected to the first chamber (18) via a passage (21), the volume of the first chamber (18) being changed in the event of a relative movement of the first and second anchoring parts (9, 10) in the range of large deflections, with the result that damping fluid is moved in the passage (21) between the first chamber (18) and the second chamber (20), and **in that** the first chamber wall (17) and/or the second chamber wall (19) are/is formed by an elastic dividing wall, which are arranged in such a way that the volume of the first chamber (18) is not changed in the event of a relative movement of the first and second anchoring parts (9, 10) in the range of small deflections about the static position of rest when the engine is at a standstill.

2. Mounting according to Claim 1, **characterized in that** the second bearing element (2) is arranged underneath, in particular substantially perpendicularly below, the first or third bearing element (1, 3).

3. Mounting according to Claim 1 or 2, **characterized in that** the third bearing element (3) is arranged adjacent to or on the torque roll axis (7).

4. Mounting according to one of Claims 1 to 3, **characterized in that** the first bearing element (1) is arranged above the torque roll axis (7).

5. Mounting according to one of Claims 1 to 4, **characterized in that** the second bearing element (2) is a sleeve bearing, in which the second anchoring part (10) encloses the first anchoring part (9) at a radial spacing.

6. Mounting according to one of Claims 1 to 5, **characterized in that** the first and/or second chamber wall (17, 19) are/is arranged at a distance from the spring body (11) in the static position of rest when the engine is at a standstill.

7. Mounting according to one of Claims 1 to 6, **characterized in that** an in particular elastic buffer is provided in the first chamber (18) and/or the second chamber (20), which buffer limits the relative movement between the first anchoring part (9) and the second anchoring part (10).

8. Mounting according to one of the preceding claims, **characterized in that** the first, second and/or third bearing elements (1, 2, 3) are fastened, in particular, directly to body parts having high rigidity, in particular in the region of the chassis fastening means.

9. Mounting according to one of the preceding claims, **characterized in that** the engine/transmission unit is fixed in position on the vehicle body with exactly three bearing elements.

10. Mounting according to one of the preceding claims, **characterized in that** the first bearing element (1) is arranged on or adjacent to the upper end of the engine/transmission unit (4), and the second bearing element (2) is arranged on or adjacent to the lower end of the engine/transmission unit (4).

11. Mounting according to one of the preceding claims, **characterized in that** the first bearing element (1) and the third bearing element (3) are arranged in such a way that the centroid of the engine/transmission unit (4) lies below an imaginary line connecting the first bearing element (1) and the third bearing element (3).

## Revendications

1. Support pour un groupe moteur-boîte de vitesses (4) monté transversalement sur une carrosserie d'un véhicule automobile, avec un premier élément de palier (1) disposé entre le moteur (5) et la carrosserie du véhicule, avec un deuxième élément de palier (2) disposé entre le moteur (5) ou la boîte de vitesses (6) et la carrosserie du véhicule et avec un troisième élément de palier (3) disposé entre la boîte de vitesses (6) et la carrosserie du véhicule, le deuxième élément de palier (2) étant disposé sans élément intermédiaire mobile sur le moteur ou la boîte de vitesses et la carrosserie, et le deuxième élément de palier (2) présentant une première partie d'ancrage (9) et une deuxième partie d'ancrage (10) mobile par rapport à celle-ci, au moins un corps formant ressort (11, 14, 14') agissant entre la première et la deuxième partie d'ancrage (9, 10), **caractérisé en ce que** le deuxième élément de palier (2) est réalisé de telle sorte, et est disposé sur le moteur ou la boîte de vitesses et la carrosserie de telle sorte que les couples du groupe moteur-boîte de vitesses (4) supportés par le deuxième élément de palier (2) soient introduits dans la carrosserie du véhicule substantiellement dans la direction longitudinale du véhicule, **en ce que** le deuxième élément de palier (2) présente, dans une première plage qui comprend de petites déviations dans la direction longitudinale du véhicule autour de la position de repos statique à l'arrêt du moteur (5), une première caractéristique élastique, et dans une deuxième plage qui se raccorde à la première plage et qui comprend des déviations plus importantes dans la direction longitudinale du véhicule, une deuxième caractéristique élastique, la deuxième caractéristique élastique étant supérieure à la première caractéristique élastique, **en ce que** le deuxième élément de palier (2) présente une première chambre (18) remplie de fluide d'amortissement et limitée par une première paroi de chambre (17) et une deuxième chambre (20) limitée par une deuxième paroi de chambre (19) et séparée de la première chambre (18), qui est reliée à la première chambre (18) par le biais d'un passage (21), le volume de la première chambre (18) variant dans le cas d'un mouvement relatif de la première et de la deuxième partie d'ancrage (9, 10) dans la plage des plus grandes déviations, de sorte que du fluide d'amortissement soit déplacé dans le passage (21) entre la première chambre (18) et la deuxième chambre (20), et **en ce que** la première et/ou la deuxième paroi de chambre (17, 19) sont formées par une paroi de séparation élastique qui est disposée de telle sorte que le volume de la première chambre (18) ne soit pas modifié dans le cas d'un mouvement relatif de la première et de la deuxième partie d'ancrage (9, 10) dans la plage des plus petites déviations autour de la position de repos statique à l'arrêt du moteur.

2. Support selon la revendication 1, **caractérisé en ce que** le deuxième élément de palier (2) est disposé en dessous, notamment substantiellement verticalement en dessous du premier ou du troisième élément de palier (1, 3).

3. Support selon la revendication 1 ou 2, **caractérisé en ce que** le troisième élément de palier (3) est disposé à proximité de l'axe d'oscillation du couple (7) ou sur celui-ci.

4. Support selon l'une quelconque des revendications 1 à 3, **caractérisé en ce que** le premier élément de palier (1) est disposé au-dessus de l'axe d'oscillation du couple (7).

5. Support selon l'une quelconque des revendications 1 à 4, **caractérisé en ce que** le deuxième élément de palier (2) est un palier en forme de manchon dans lequel la deuxième partie d'ancrage (10) entoure la première partie d'ancrage (9) à distance radiale.

6. Support selon l'une quelconque des revendications 1 à 5, **caractérisé en ce que** la première et/ou la deuxième paroi de chambre (17, 19) sont disposées dans la position de repos statique à l'arrêt du moteur à une certaine distance du corps formant ressort (11).

7. Support selon l'une quelconque des revendications 1 à 6, **caractérisé en ce que** dans la première chambre (18) et/ou dans la deuxième chambre (20) est prévu un tampon notamment élastique, qui limite le mouvement relatif entre la première et la deuxième partie d'ancrage (9, 10).

8. Support selon l'une quelconque des revendications précédentes, **caractérisé en ce que** le premier, deuxième et/ou troisième élément de palier (1, 2, 3) sont fixés en particulier directement en des endroits de la carrosserie de grande rigidité, notamment dans la région de la fixation au châssis.

9. Support selon l'une quelconque des revendications précédentes, **caractérisé en ce que** le groupe moteur-boîte de vitesses est fixé avec exactement trois éléments de palier sur la carrosserie du véhicule.

10. Support selon l'une quelconque des revendications précédentes, **caractérisé en ce que** le premier élément de palier (1) est disposé sur ou à proximité de l'extrémité supérieure du groupe moteur-boîte de vitesses (4) et le deuxième élément de palier (2) est disposé sur ou à proximité de l'extrémité inférieure du groupe moteur-boîte de vitesses (4).

11. Support selon l'une quelconque des revendications précédentes, **caractérisé en ce que** le premier et le troisième élément de palier (1, 3) sont disposés de telle sorte que le centre de gravité du groupe moteur-boîte de vitesses (4) soit situé en dessous d'une ligne de connexion imaginaire entre le premier élément de palier (1) et le troisième élément de palier (3).
